# EUROPEAN PATENT APPLICATION

(11) **EP 3 144 573 A1**
(43) Date of publication of application: **22.03.2017**
(21) Application number: 16152222.2
(22) Date of filing: 21.01.2016
(51) Int. Cl.: F16L 3/10, F16L 21/06, F16L 23/08

(54) **PIPE JOINT**

(30) Priority: 18.09.2015 JP 2015004780 U
(71) Applicant: Nagashima Manufacturing Co., Ltd., Kahoku-gun, Ishikawa (JP)
(72) Inventor: NAGASHIMA, Takeshi, KAHOKU-GUN, Ishikawa (JP); HIRASAWA, Toru, KAHOKU-GUN, Ishikawa (JP); KAMEDA, Kazushige, KAHOKU-GUN, Ishikawa (JP); NAKAI, Tetsuya, KAHOKU-GUN, Ishikawa (JP); MORISAWA, Shinsuke, KAHOKU-GUN, Ishikawa (JP); SUZUKI, Yui, KAHOKU-GUN, Ishikawa (JP); NAKAHARA, Ryoya, KAHOKU-GUN, Ishikawa (JP); TAYA, Yuto, KAHOKU-GUN, Ishikawa (JP); MATSUDA, Yuki, KAHOKU-GUN, Ishikawa (JP); MORITA, Mariko, KAHOKU-GUN, Ishikawa (JP); KAMATA, Hiromi, KAHOKU-GUN, Ishikawa (JP)
(74) Representative: Lenzing Gerber Stute

(57) **Abstract**

A pipe joint includes a pair of clamp members (15a, 15b) including a pipe joint main body unit (11) formed in an arc shape, a pair of flange portions (12) provided to protrude at both end portions in an axial direction of the pipe joint main body unit, a pair of fixed flange units (13) formed at both end portions in a diameter direction of the pipe joint main body unit, and fixing means insertion units (14) formed in the fixed flange unit, wherein when, at end portions of a pair of pipes (40) to be connected, the pair of clamp members are attached from upper/lower directions, and fixing means (16) are inserted into the fixing means insertion units and fixed therein, the pipe joint can connect the pair of pipes, wherein the flange portions are provided along an entire periphery of the pipe joint main body unit, and the flange portion of one of the clamp members and the flange portion of the other of the clamp members have joint surface units (18a, 18b) coming into contact with each other with inclinations at a same angle with respect to an axial direction of the pipe.

## Description

### BACKGROUND

### Technical Field

The present invention relates to improvement of a pipe joint.

### Background of the Art

In general, a housing type pipe joint is used in order to fix an end portion of a pipe. Such a pipe joint is, in general, configured to attach a pair of clamp members provided with a pipe joint main body unit formed in an arch shape, a pair of fixed flange units formed at each end portion of the pipe joint main body unit, and a fixing means insertion unit formed in the fixed flange unit to the pipe from the upper/lower direction, and is configured to insert and fix fixing means made of, e. g. , a bolt and a nut into the fixing means insertion unit.

With such a conventional pipe joint, in a case where a pipe joint is attached to an end portion of a pipe, the bolt and the nut fixes the fixed flange unit in such a state that, with respect to the fixed flange unit, the bolt and the nut are perpendicular to the axial direction of the pipe, and in general, the bolt and the nut are arranged in the upper/lower direction with respect to the pipe. As a result, in a case where a great earthquake occurs, lateral oscillation is applied in parallel with the joint surface of the pair of clamp members of the pipe joint, and acts to cause deviation of the joint surface. Accordingly, this acts to loosen the engagement state of the bolt and the nut.

On the other hand, longitudinal oscillation directly acts along the axial direction of the bolt and the nut which fix the pipe joint, and loosen the engagement state of the bolt and the nut.

Therefore, since the past, a pipe joint having a high degree of earthquake proof performance is desired. From this kind of perspective, the application of the present case conducted patent document search, and extracted JP 5-47683 Y, JP 3-89295 Y, and JP 2011-226574 A.

JP 5-47683 Y discloses a pipe joint in which a separation wall is provided, in a direction for connecting a pair of parallel engagement claws, at each interface portion of a ring shaped unit and both-end flanges, and an engagement recessed portion having a width within a range of a wall thickness is provided between an inner surface and an outer surface of one of the separation walls, and an engagement protruding portion suitable for the engagement recessed portion is provided between an inner surface and an outer surface of the other of the separation walls in such a manner the engagement protruding portion protrudes from the end surface of the separation wall with a thickness within the range of the wall thickness, and arc surfaces of the engagement recessed portion and the engagement protruding portion are formed at a position where the central portion of each of the engagement recessed portion and the engagement protruding portion is slightly off in a staggered manner with respect to the central line connecting both side flanges, and both arc surfaces are caused to be in a sliding contact, and the engagement claw is configured to be in contact with a side surface of a ring shaped groove of the pipe.

JP 3-89295 Y discloses a pipe joint with a housing in which a first fastening surface in a recessed shape made by connecting two inclined surfaces in a V shape is provided on a fastening surface of a fastening flange at one side, and a second fastening surface in a protruding shape and in an inverse V shape made of two inclined surfaces having the same inclination degrees as each inclined surface of the first fastening surface is provided on a fastening surface of a fastening flange at the other side, and both of the vertex portions of the first fastening surface and the second fastening surface are located at the same side but are away by different distances from the fastening central axial line of the bolt.

JP 2011-226574 A discloses a pipe joint including multiple housings provided with, on an inner surface of the housing main body, an inner flange portion and an outer flange portion provided on an inner side and an outer side, respectively of each of the engagement units and coming into contact with the outer surface of the pipe.

The invention disclosed in JP 5-47683 Y and JP 3-89295 Y is an invention for preventing rattle between the pair of housings when the pipe joint is screwed with the fixing means, and is not an invention aimed to enhance the earthquake proof performance of the pipe joint.

It is the object of the invention disclosed in JP 2011-226574 A to "provide a housing shaped pipe joint capable of rigidly fixing the pipe in the axial direction and receiving the load applied to the pipe by itself and suppressing the deviation of the pipe", and the invention disclosed in JP 2011-226574 A is not an invention aimed to enhance the earthquake proof performance of the pipe joint.

As a result, even the invention disclosed in JP 5-47683 Y, JP 3-89295 Y, and JP 2011-226574 A cannot prevent deviation of the pipe joint itself or loosening of the fixing means in a case where longitudinal oscillation and lateral oscillation are applied to the pipe joint when an earthquake occurs.

### SUMMARY

The invention is to solve such existing problems, and it is an object of the invention to provide a pipe joint having a superior earthquake proof performance.

In order to achieve the above object, according to a first aspect of the invention, there is provided a pipe joint including a pair of clamp members including a pipe joint main body unit formed in an arc shape, a pair of flange portions provided to protrude at both end portions in an axial direction of the pipe joint main body unit, a pair of fixed flange units formed at both end portions in a diameter direction of the pipe joint main body unit, and a fixing means insertion unit formed in the fixed flange unit, wherein when, at end portions of a pair of pipes to be connected, the pair of clamp members are attached from upper/lower directions, and fixing means is inserted into the fixing means insertion unit and fixed therein, the pipe joint can connect the pair of pipes, wherein the flange portion is provided along an entire periphery of the pipe joint main body unit, and the flange portion of one of the clamp members and the flange portion of the other of the clamp members have joint surface units coming into contact with each other with inclinations at a same angle with respect to an axial direction of the pipe.

Therefore, the joint surface unit is arranged with an inclination with respect to a general surface of a contact surface of the pair of clamp members.

According to a second aspect of the invention, at both side portions in the width direction of the pipe joint main body unit, the joint surface units are provided with inclinations in opposite directions to the axial direction of the pipe.

Therefore, even in a case where any one of the longitudinal oscillation and the lateral oscillation is applied when the earthquake occurs, the pair of joint surface units come into pressurized contact with each other due to the force received from the outside.

According to a third aspect of the invention, a distal end portion of the joint surface unit of the flange portion of the one of the clamp members and a distal end portion of the joint surface unit of the flange portion of the other of the clamp members are arranged with displacements in a diameter direction with respect to general surfaces of contact surface of the pair of clamp members.

Therefore, when the earthquake occurs, the force applied to the general surface of the contact surface and the force applied to the joint surface unit are input in different diameter directions.

According to a fourth aspect of the invention, the fixing means insertion unit of the one of the clamp members and the fixing means insertion unit of the other of the clamp members have contact surface portions along an axial direction of the pipe.

Therefore, for example, in a case where the longitudinal oscillation is applied when the earthquake occurs, the force is applied in a direction perpendicular to the axial direction of the pipe, and the contact surface portion is arranged in a direction perpendicular to the input of the force of the longitudinal oscillation.

According to a fifth aspect of the invention, the fixing means insertion unit is arranged with an inclination with respect to the axial direction of the pipe, and in a case where the one of the clamp members and the other of the clamp members are attached to the pipes, the fixing means insertion unit of the one of the clamp members and the fixing means insertion unit of the other of the clamp members form a fixing means insertion unit in which fixing means that can fix the pair of clamp members can be inserted in such an inclined state with respect to the axial direction of the pipe.

Therefore, even in a case where any one of the longitudinal oscillation and the lateral oscillation is applied when the earthquake occurs, the input force is input via the fixing means insertion unit in a direction inclined with respect to the axial direction of the pipe.

According to a sixth aspect of the invention, the fixing means insertion units are provided in the pair of fixed flange units at both side portions with respect to each other in such a manner that the fixing means insertion units are inclined in opposite direction with respect to the axial direction of the pipe.

Therefore, even in a case where any one of the longitudinal oscillation and the lateral oscillation is applied when the earthquake occurs, the input force is input via the fixing means insertion unit in different direction with respect to the axial direction of the pipe.

With the pipe joint set forth in the first to third aspects, when an earthquake occurs, and the lateral oscillation is applied to the pipe joint, the lateral oscillation is applied in a direction parallel to the general surface of the contact surface of the pair of clamp members of the pipe joint, and causes an action to cause deviation of the contact surface, and in contrast, the joint surface unit is arranged with an inclination with respect to the general surface of the contact surface, and therefore, when coming into pressurized contact with each other due to the force of the lateral oscillation, the pipe joint can resist the force of the lateral oscillation.

Therefore, the deviation of the contact surface and the deviation of the pipe joint itself caused by the deviation of the contact surface can be prevented. In addition, the fixing means such as a bolt, a nut, and the like are prevented from being loosened by the deviation of the pipe joint itself.

As a result, the pipe joint that is extremely resistant to the quake of the earthquake and of which fixing of the pipes are not disconnected even during the earthquake can be provided.

In particular, with the pipe joint set forth in the second aspect, even in a case where any one of the longitudinal oscillation and the lateral oscillation is applied when the earthquake occurs, the input force is input via the joint surface unit in different directions with respect to the axial direction of the pipe, and therefore, the deviation of the pipe joint itself can be effective prevented.

In particular, with the pipe joint set forth in the third aspect, when the earthquake occurs, the force applied to the general surface of the contact surface and the force applied to the joint surface unit are input in different diameter directions, and therefore, even in a case where the longitudinal oscillation and the lateral oscillation is applied to the pipe joint, the deviation of the pipe joint itself can be effectively prevented.

With the pipe joint set forth in the fourth aspect, for example, when the longitudinal oscillation is applied when the earthquake occurs, the longitudinal oscillation is input in a direction perpendicular to the axial direction of the pipe, and the contact surface portion is arranged in a direction perpendicular to the input of the force of the longitudinal oscillation, and therefore, the deviation of the contact surface portion caused by the longitudinal oscillation can be effectively prevented.

With the pipe joint set forth in the fifth and sixth aspects, even in a case where any one of the longitudinal oscillation and the lateral oscillation is applied when the earthquake occurs, the input force is input via the fixing means insertion unit in a direction inclined with respect to the axial direction of the pipe, and therefore, the deviation of the pipe joint itself can be prevented.

In addition, the fixing means such as a bolt, a nut, and the like inserted into the fixing means insertion unit can be prevented from being loosened by the deviation of the pipe joint itself.

In particular, with the pipe joint set forth in the sixth aspect, in a case where any one of the longitudinal oscillation and the lateral oscillation is applied when the earthquake occurs, the input force is input via the fixing means insertion unit in different directions with respect to the axial direction of the pipe, and therefore, the deviation of the pipe joint itself can be effectively prevented.

### BRIEF DESCRIPTION OF DRAWINGS

FIG. 1 is a side surface view along a diameter direction of a pipe in the first embodiment of a pipe joint according to the invention;
FIG. 2 is a side surface view along an axial direction of the pipe in the first embodiment of the pipe joint according to the invention; and
FIG. 3 is a side surface view along an axial direction of a pipe in a second embodiment of a pipe joint according to the invention.

### DETAILED DESCRIPTION

Hereinafter, the present invention will be described in detail with reference to an embodiment shown in the appended drawings.

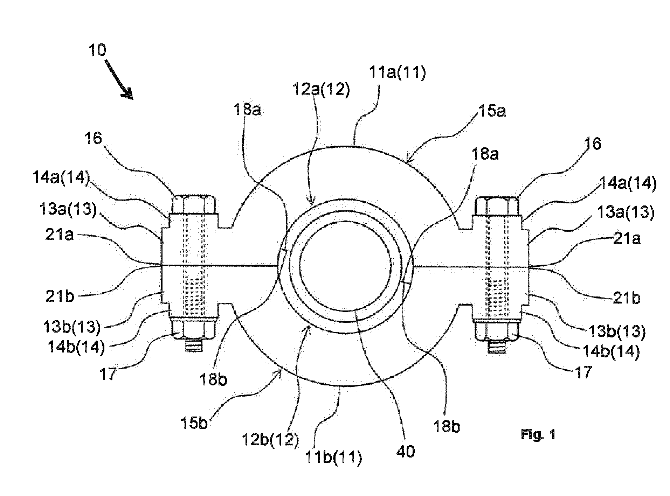

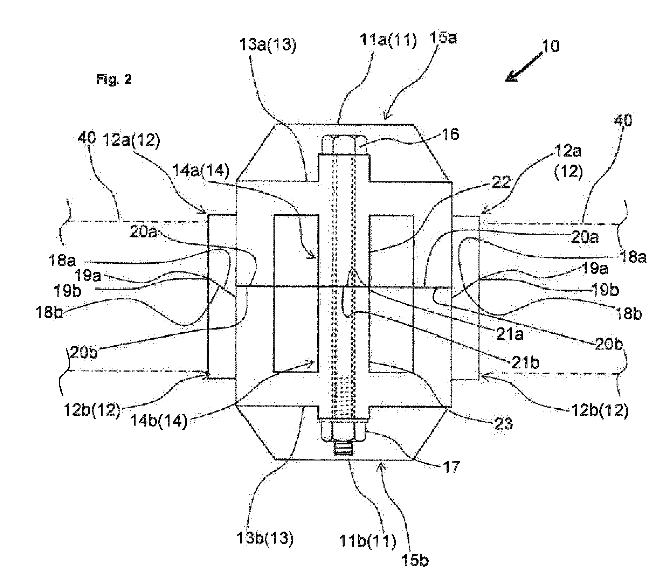

As shown in FIGS. 1 and 2, a pipe joint 10 according to the embodiment of the present invention includes a pair of clamp members 15a, 15b including a pipe joint main body unit 11 formed so that its side surface is in a semicircular arc shape, a pair of flange portions 12, 12 formed to protrude at both end portions in the axial direction of the pipe joint main body unit 11, a pair of fixed flange units 13, 13 formed at both end portions in the diameter direction of the pipe joint main body unit 11, and fixing means insertion units 14, 14 formed in the fixed flange units 13, 13.

As shown in FIGS. 1 and 2, this is configured to connect the pair of pipes 40, 40 when, at the end portions of a pair of pipes 40, 40 which are to be connected, the pair of clamp members 15a, 15b are attached from the upper/lower direction, and the bolt 16, which is fixing means, is inserted into the fixing means insertion units 14, 14 and fixed with the nut 17.

As shown in FIGS. 1 and 2, the flange portions 12, 12 according to the present embodiment are provided along the entire periphery of the pipe joint main body unit 11, and each of the pair of flange portions 12a, 12a of the clamp member 15a and the pair of flange portions 12b, 12b of the clamp member 15b has joint surface units 18a, 18a and joint surface units 18b, 18b that come into contact with each other with an inclination at the same angle with respect to the axial direction of the pipe 40.

As shown in FIG. 2, at both side portions in the width direction of the pipe joint main body unit 11, the joint surface units 18a, 18a, 18b, 18b according to the present embodiment are provided with inclinations in the opposite directions to the axial direction of the pipe 40.

As shown in FIG. 2, each of distal end portions 19a, 19a of the joint surface units 18a, 18a of the flange portion 12a, 12a of the clamp member 15a according to the present embodiment and distal end portions 19b, 19b of the joint surface units 18b, 18b of the flange portion 12b, 12b of the clamp member 15b according to the present embodiment is provided with a deviation in the diameter direction with respect to the contact surfaces 20a, 20b of the pair of clamp members 15a, 15b.

As shown in FIGS. 1 and 2, the fixing means insertion units 14a, 14a of the clamp member 15a and the fixing means insertion units 14b, 14b of the clamp member 15b according to the present embodiment are configured so as to form fixing means insertion units 14, 14 into which the bolt 16 and the nut 17 which are the fixing means that can fix the pair of clamp members 15a, 15b can be inserted in the state of arrangement perpendicular to the axial direction of the pipe 40, in a case where the clamp member 15a and the clamp member 15b are attached to the pipe 40.

As shown in FIGS. 1 and 2, the fixing means insertion unit 14a of the clamp member 15a and the fixing means insertion unit 14b of the clamp member 15b according to the present embodiment have contact surface portions 21a, 21b along the axial direction of the pipe 40.

More specifically, as shown in FIGS. 1 and 2, the fixing means insertion units 14a, 14b are integrally formed in the fixed flange units 13a, 13b of the pair of upper/lower clamp members 15a, 15b, respectively, and include an upper half portion 22 provided in the clamp member 15a arranged at the upper portion of the pipe 40 and a lower half portion 23 provided in the clamp member 15b arranged in the lower portion of the pipe 40, and contact surface portions 21a, 21b which are joined with each other are formed at the lower end portion of the upper half portion 22 and the upper end portion of the lower half portion 23, respectively.

As shown in FIGS. 1 and 2, each of the upper half portion 22 and the lower half portion 23 is formed in a short cylindrical shape having such an inner diameter dimension that the bolt 16 can be inserted. As shown in FIGS. 1 and 2, in a case where the pair of clamp members 15a, 15b are attached to and joined with the upper portion and the lower portion of the pipe 40, fixing means insertion units 14, 14 in a narrow and long cylindrical shape are formed by the upper half portion 22 and the lower half portion 23, and joint surfaces along the axial direction of the pipe 40 are formed on the contact surface portions 21a, 21b.

As shown in FIGS. 1 and 2, the fixing means insertion units 14, 14 according to the present embodiment are arranged at the both side portions of the pair of fixed flange units 13, 13, respectively, in such a manner that the fixing means insertion units 14, 14 are perpendicular to the axial direction of the pipe 40.

As a result, in a case where the pair of upper/lower clamp members 15a, 15b are attached to the upper portion and the lower portion of the pipe 40, the fixing means insertion units 14, 14 are arranged in such a manner that the upper half portion 22 and the lower half portion 23 are continuous to each other, and the fixing means insertion units 14, 14 penetrate through the fixed flange units 13, 13 in a direction perpendicular to the axial direction.

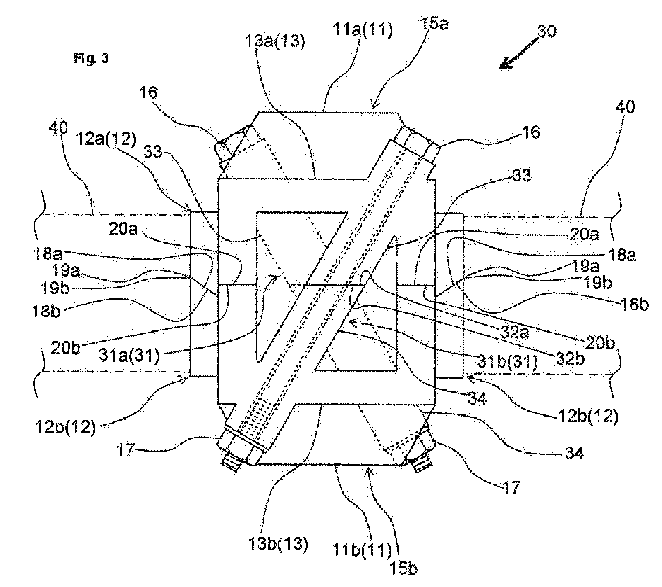

As shown in FIG. 3, with regard to a pipe joint 30 according to the second embodiment, the same elements as those of the pipe joint 10 according to the first embodiment will be denoted with the same reference numerals as those of the first embodiment, and the description thereabout is omitted.

As shown in FIG. 3, in a case where a clamp member 15a and a clamp member 15b are attached to a pipe 40, fixing means insertion units 31a, 31a of a clamp member 15a and fixing means insertion units 31b, 31b of a clamp member 15b according to the present embodiment are configured to form fixing means insertion units 31, 31 in which a bolt 16 and a nut 17 which are fixing means that can fix the pair of clamp members 15a, 15b can be inserted in an inclined state with respect to the axial direction of the pipe 40.

As shown in FIG. 3, the fixing means insertion unit 31a of the clamp member 15a and the fixing means insertion unit 31b of the clamp member 15b according to the present embodiment have contact surface portions 32a, 32b along the axial direction of the pipe 40.

More specifically, as shown in FIG. 3, fixing means insertion units 31a, 31b are integrally formed in the fixed flange units 13a, 13b of the pair of upper/lower clamp members 15a, 15b, and include an upper half portion 33 provided in the clamp member 15a arranged in the upper portion of the pipe 40 and a lower half portion 34 provided in the clamp member 15b arranged in the lower portion of the pipe 40 with the same angle as the upper half portion 33, and contact surface portions 32a, 32b which are joined to each other are formed at the lower end portion of the upper half portion 33 and the upper end portion of the lower half portion 34, respectively.

As shown in FIG. 3, each of the upper half portion 33 and the lower half portion 34 is formed in a short cylindrical shape having such an inner diameter dimension that the bolt 16 can be inserted. As shown in FIG. 3, in a case where the pair of clamp members 15a, 15b are attached to and joined with the upper portion and the lower portion of the pipe 40, fixing means insertion units 31, 31 in a narrow and long cylindrical shape are formed by the upper half portion 33 and the lower half portion 34, and joint surfaces along the axial direction of the pipe 40 are formed on the contact surface portions 32a, 32b.

As shown in FIG. 3, at both side portions, the fixing means insertion units 31, 31 according to the present embodiment is provided on the pair of fixed flange units 13, 13 with inclinations in the opposite directions along the axial direction of the pipe 40

As a result, in a case where the pair of upper/lower clamp members 15a, 15b are attached to the upper portion and the lower portion of the pipe 40, the fixing means insertion units 31, 31 are arranged in such a manner that the upper half portion 33 and the lower half portion 34 are continuous to each other, and the fixing means insertion units 31, 31 penetrate through the fixed flange units 13, 13 in diagonal directions, and the upper half portion 33 and the lower half portion 34 are arranged to cross in an X shape at the sides of the pipe 40. The other configurations are the same as those of the pipe joint 10 according to the first embodiment.

The actions of the pipe joints 10 and 30 according to the present embodiment will be explained.

As shown in FIGS. 1 and 2, in a case where the pipes 40, 40 are joined by using the pipe joint 10 according to the present embodiment, the pair of clamp members 15a, 15b constituting the pipe joint 10 at the end portions of the pipes 40, 40 are arranged at the upper portion and lower portion of the pipes 40, 40, respectively. In this case, the pipe joint main body units 11a, 11b are joined with the end portions of the pipes 40, 40, respectively, and the upper half portion 22 and the lower half portion 23 are joined via the contact surface portions 21a, 21b and become continuous, so that the fixing means insertion units 14, 14 are formed.

Thereafter, the bolt 16 is inserted from the upper side into the fixing means insertion units 14, 14 to be arranged in a penetrating manner, and the nut 17 is screwed to the distal end portion, so that the pipes 40, 40 can be joined and fixed via the pair of clamp members 15a, 15b.

As shown in FIG. 3, in the case where the pipes 40, 40 are joined by using the pipe joint 30 according to the second embodiment, the pair of clamp members 15a, 15b constituting the pipe joint 30 at the end portions of the pipes 40, 40 are arranged at the upper portion and the lower portion of the pipes 40, 40, respectively. In this case, the pipe joint main body units 11a, 11b are joined with the end portions of the pipes 40, 40, respectively, and the upper half portion 33 and the lower half portion 34 are joined via the contact surface portions 32a, 32b to become continuous, so that the fixing means insertion units 31, 31 are formed.

Thereafter, the bolt 16 is inserted from the upper side into the fixing means insertion units 31, 31 to be arranged in a penetrating manner, and the nut 17 is screwed to the distal end portion, so that the pipes 40, 40 can be joined and fixed via the pair of clamp members 15a, 15b.

At this occasion, as shown in FIGS. 1 to 3, with the pipe joints 10 and 30 according to the present embodiment, in a case where an earthquake occurs, and lateral oscillation is applied to the pipe joints 10, 30, this affects in a parallel direction to the contact surfaces 20a, 20b of the pair of clamp members 15a, 15b of the pipe joints 10, 30 to cause an action to cause deviation of the contact surfaces 20a, 20b, and on the other hand, the joint surface units 18a, 18b are arranged in an inclined manner with respect to the contact surfaces 20a, 20b, and therefore, in a case where force of the lateral oscillation is applied, the distal end portions 19a, 19b of the joint surface units 18a, 18a come into pressurized contact with each other, and as a result, even in the case where the force of the lateral oscillation is applied, the contact surfaces 20a, 20b would not deviate.

Therefore, the deviation of the contact surfaces 20a, 20b and the deviation of the pipe joints 10, 30 themselves caused by the deviation of the contact surfaces 20a, 20b can be effectively prevented. In addition, the fixing means of the bolt 16 and the nut 17 can be prevented from being loosened because of the deviation of the pipe joints 10, 30 themselves.

As a result, the pipe joint that is extremely resistant to the quake of the earthquake and of which fixing of the pipes are not disconnected even during the earthquake can be provided.

In particular, as shown in FIGS. 1 to 3, with the pipe joints 10 and 30 according to the present embodiment, in a case where any one of the longitudinal oscillation and the lateral oscillation causes an action during the earthquake, the input force is input via the joint surface units 18a, 18b into the axial direction of the pipe 40 in different directions, and therefore, the deviation of the pipe joint itself can be effectively prevented.

In particular, as shown in FIGS. 1 to 3, with the the pipe joints 10 and 30 according to the present embodiment, the force applied to the contact surfaces 20a, 20b and the force applied to the joint surface units 18a, 18b are input in different diameter directions when the earthquake occurs, and therefore, even in a case where the longitudinal oscillation and the lateral oscillation are applied to the pipe joints 10 and 30, the deviation of the pipe joint itself can be effectively prevented.

As shown in FIGS. 1 to 3, with the pipe joints 10 and 30 according to the present embodiment, for example, in a case where the longitudinal oscillation is applied when the earthquake occurs, force is input in a direction perpendicular to the axial direction of the pipe 40, and since the contact surface portions 21a, 21b and 32a, 32b are arranged in a direction perpendicular to the input of the force of the longitudinal oscillation, the deviation of the contact surface portions 21a, 21b and 32a, 32b can be effectively prevented because of the longitudinal oscillation.

As shown in FIG. 3, with the pipe joint 30 according to the second embodiment, in addition to the advantages of the pipe joint 10 according to the first embodiment, even in a case where any one of the longitudinal oscillation and the lateral oscillation is applied when the earthquake occurs, the input force is input via the fixing means insertion units 31, 31 in a direction inclined with respect to the axial direction of the pipe 40, and the deviation of the pipe joint 30 itself can be prevented.

The fixing means of the bolt 16 and the nut 17 inserted into the fixing means insertion units 31, 31 can be prevented from being loosened because of the deviation of the pipe joint 30 itself.

In particular, with the pipe joint 30 according to the second embodiment, even in a case where any one of the longitudinal oscillation and the lateral oscillation is applied when the earthquake occurs, the input force is input via the fixing means insertion units 31, 31 in different direction with respect to the axial direction of the pipe 40, and therefore, the deviation of the pipe joint 30 itself can be effectively prevented.

The invention can be widely applied to pipe joints, and therefore, the invention has the industrial applicability.

## Claims

1. A pipe joint comprising a pair of clamp members including a pipe joint main body unit formed in an arc shape, a pair of flange portions provided to protrude at both end portions in an axial direction of the pipe joint main body unit, a pair of fixed flange units formed at both end portions in a diameter direction of the pipe joint main body unit, and a fixing means insertion unit formed in the fixed flange unit, wherein when, at end portions of a pair of pipes to be connected, the pair of clamp members are attached from upper/lower directions, and fixing means is inserted into the fixing means insertion unit and fixed therein, the pipe joint can connect the pair of pipes,
wherein the flange portion is provided along an entire periphery of the pipe joint main body unit, and the flange portion of one of the clamp members and the flange portion of the other of the clamp members have joint surface units coming into contact with each other with inclinations at a same angle with respect to an axial direction of the pipe.

2. The pipe joint according to claim 1, wherein, at both side portions in the width direction of the pipe joint main body unit, the joint surface units are provided with inclinations in opposite directions to the axial direction of the pipe.

3. The pipe joint according to claim 1, wherein
a distal end portion of the joint surface unit of the flange portion of the one of the clamp members and a distal end portion of the joint surface unit of the flange portion of the other of the clamp members are arranged with displacements in a diameter direction with respect to general surfaces of contact surface of the pair of clamp members.

4. The pipe joint according to claim 1, wherein the fixing means insertion unit of the one of the clamp members and the fixing means insertion unit of the other of the clamp members have contact surface portions along an axial direction of the pipe.

5. The pipe joint according to claim 4, wherein the fixing means insertion unit is arranged with an inclination with respect to the axial direction of the pipe, and
in a case where the one of the clamp members and the other of the clamp members are attached to the pipes, the fixing means insertion unit of the one of the clamp members and the fixing means insertion unit of the other of the clamp members form a fixing means insertion unit in which fixing means that can fix the pair of clamp members can be inserted in such an inclined state with respect to the axial direction of the pipe.

6. The pipe joint according to claim 5, wherein the fixing means insertion units are provided in the pair of fixed flange units at both side portions with respect to each other in such a manner that the fixing means insertion units are inclined in opposite direction with respect to the axial direction of the pipe.
